# FASCICULE DE BREVET EUROPEEN

(11) **EP 0 919 698 B1**
(45) Date de publication et mention de la délivrance du brevet: **20.08.2003**
(21) Numéro de dépôt: 98402953.8
(22) Date de dépôt: 26.11.1998
(51) Int. Cl.: F01D 5/18, F01D 9/04

(54) **Aube de distributeur de turbine refroidie**
Gekühlte Statorschaufel
Cooled stator vane

(30) Priorité: 27.11.1997 FR 9714896
(43) Date de publication de la demande: 02.06.1999
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Portefaix, Laurent Roger, Jacques, 77430 Champagne S/Seine (FR)

(56) Documents cités:
- US-A- 3 628 880
- US-A- 3 781 129
- US-A- 3 994 622
- US-A- 4 288 201

## Description

L'invention concerne les distributeurs de turbine à haute pression des turbomachines, notamment des turbomachines d'aviation.

Il est connu qu'une augmentation du niveau des températures à l'entrée de la ou des turbines permet d'optimiser les performances de la turbomachine. Une augmentation du niveau de cette température permet d'obtenir un gain en consommation spécifique, c'est-à-dire de pouvoir augmenter le rayon d'action d'un avion ou de réduire la masse de carburant à emporter. Cette augmentation de température permet aussi de faire croître la poussée de la turbomachine. Les moteurs modernes actuels tolèrent une température à l'entrée de la turbine de 1577°C, alors que les turbomachines conçues en 1950 (ATAR par exemple) ne toléraient que 930°C.

Pour atteindre de tels niveaux de température, il est nécessaire d'avoir recours à un dispositif de refroidissement des aubes du distributeur et de la roue de turbine. Pour cela, on crée à l'intérieur de l'aube des circuits permettant une circulation organisée de l'air de refroidissement et, dans la paroi de l'aube, des perforations disposées pour créer un film protecteur de l'aube, le refroidissement étant obtenu par deux grands procédés : la convection interne et le film protecteur.

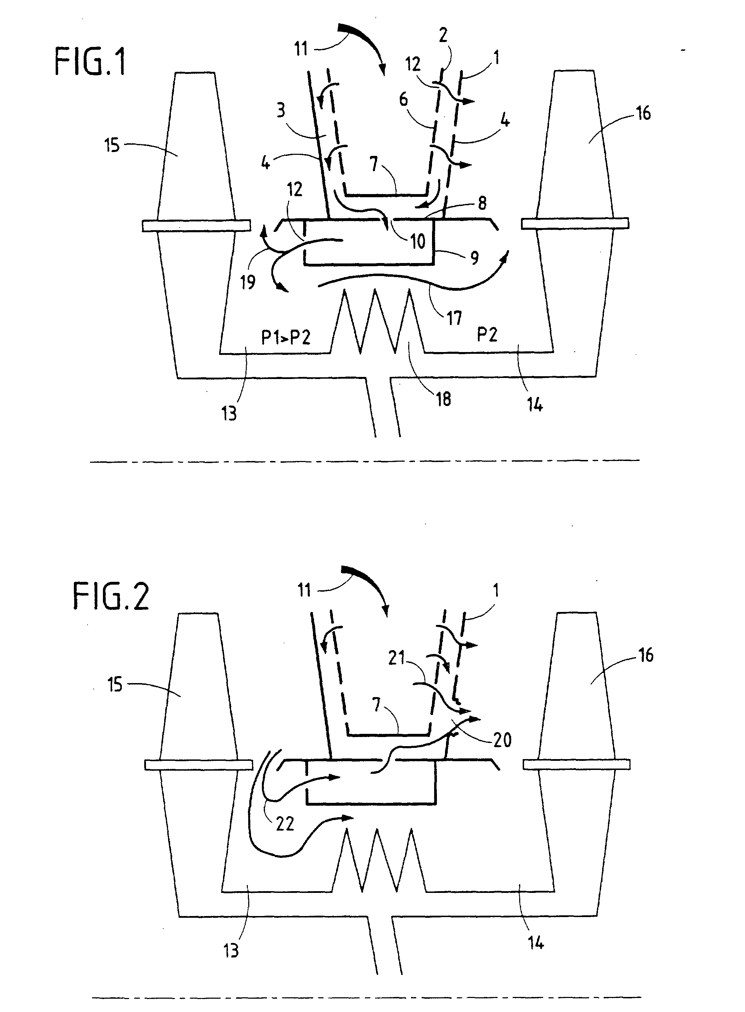

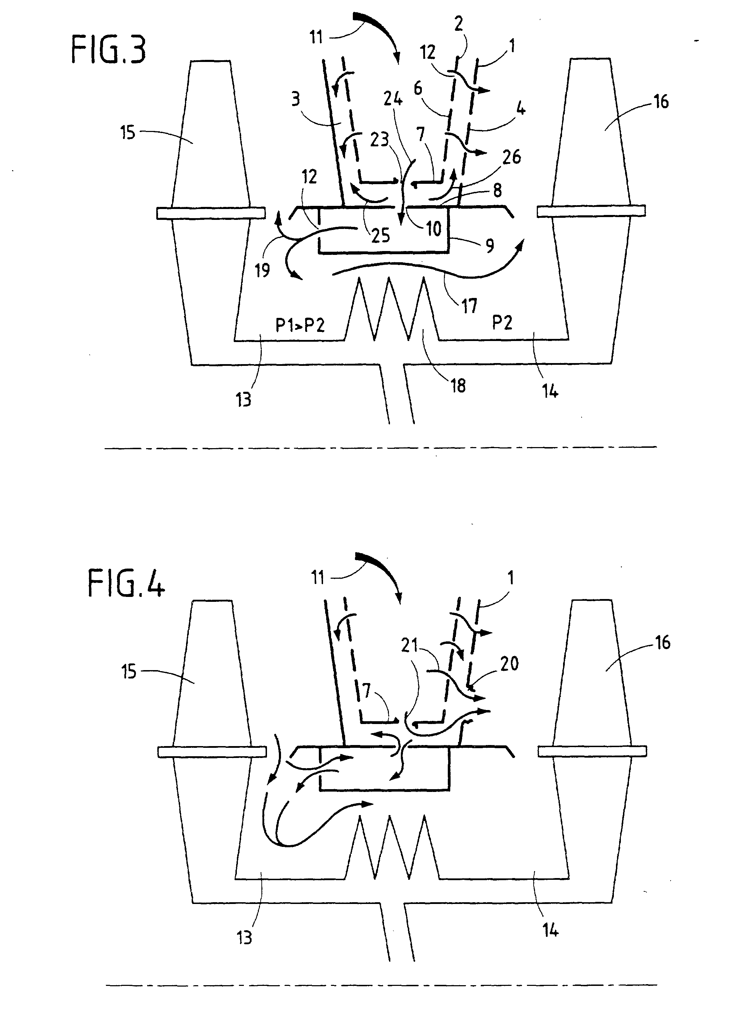

Les figures 1 et 2 montrent la solution actuellement utilisée sur les moteurs CF6-80 et GE 90.

L'aube qui comporte une pale 1 creuse, insérée entre une plate-forme externe et une plate-forme interne 9, contient une chemise 2 qui définit une cavité périphérique 3 continue, entre la paroi externe 4 de la pale 1 et l'extérieur de la chemise 2. Des plots solidaires de la paroi 4 ou de la chemise 2 maintiennent l'écartement entre la chemise 2 et ladite paroi 4,une telle chemise est également divulguée par le document US-A-4 288 201. La chemise 2 comporte une jupe 6 multiperforée et une paroi de fond 7 disposée à distance de la paroi 8 qui sépare la pale 1 de la plate-forme interne 9 également creuse, cette paroi 8 comportant un orifice 10. Le débit d'air 11 délivré par une source d'air sous pression, en général le compresseur de la turbomachine, transite par la plate-forme externe, arrive à l'intérieur de la chemise 2 et s'échappe par la multiperforation de la jupe 6 en formant, dans la cavité périphérique 3, des jets d'air 12 qui refroidissent la paroi 4 de l'aube 1 par impact. Ce débit d'air 11 progresse ensuite vers l'intérieur de la plate-forme interne 9 qu'il traverse en la refroidissant pour enfin s'échapper par des orifices 12 situés à l'amont de la plate-forme interne 9. Comme la pression P1 régnant dans l'enceinte amont 13 est supérieure à la pression qui règne dans l'enceinte 14, ces enceintes étant délimitées par la plate-forme interne 9 et respectivement le disque de turbine amont 15 et le disque de turbine aval 16, un débit d'air va se créer au travers du labyrinthe 18 qui sépare les enceintes 13 et 14 et qui fixe la valeur du débit d'air 17. Ce débit d'air 17 est rejeté dans la veine de gaz chauds en ayant au passage refroidi la périphérie du disque aval 16. Le reste de l'air de refroidissement 19 issu des orifices 12 est rejetée dans la veine de gaz chauds, en amont du distributeur en ayant au passage refroidi la périphérie du disque de turbine amont 15. Les disques de turbine haute pression sont ainsi refroidis par ces débits d'air 17 et 19. Avec cette disposition de technologie simple, la totalité du débit d'air de refroidissement 11 injecté à l'intérieur de la chemise 2 sert d'abord à refroidir la pale 1 de l'aube.

Cependant, l'air injecté à l'intérieur de l'aube doit redescendre vers le pied d'aube pour s'évacuer par la plate-forme interne 9. Il y a ainsi création d'un cisaillement du débit destiné à l'impact, ce qui ne facilite pas la modélisation mathématique et dégrade les performances du refroidissement, car l'air de refroidissement de la plate-forme interne 9 et des disques de turbine 15, 16 s'est déjà réchauffé lors du refroidissement de la paroi 4 de la pale 1.

Si maintenant une crique 20 apparaît au bord de fuite de la pale 1, ainsi que cela est montré sur la figure 2, une partie 21 au moins du débit d'air de refroidissement va s'écouler par la crique 20, et comme la pression régnant à l'aval des aubes est inférieure à la pression régnant en amont, il y a un risque de voir une inversion du sens de l'écoulement à l'intérieur de la plate-forme interne 9, cette dernière étant traversée par un débit 22 de gaz chauds issus de l'amont du distributeur et transitant par l'enceinte amont 13. La plate-forme interne 9 est alors chauffée, ce qui peut provoquer des dommages graves, voire une destruction de l'aube. Le débit passant sous la plate-forme 9 vient directement des gaz très chauds de la veine, provoquant un échauffement dangereux du rotor qui peut conduire à la destruction de toute la turbine.

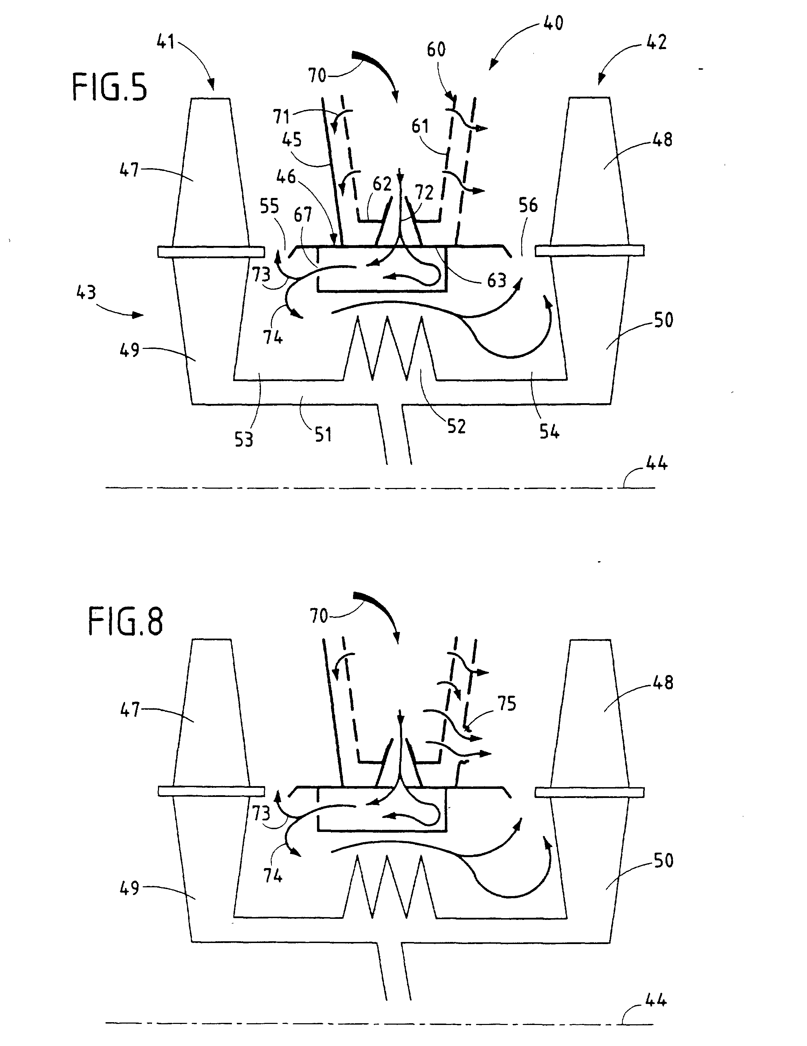

Les figures 3 et 4 montrent une variante de réalisation du circuit de refroidissement proche du mode de réalisation montré sur les figures 1 et 2. Ici, la paroi de fond 7 de la chemise 2 comporte un orifice de sortie 23 en regard de l'orifice d'entrée 10 dans la plate-forme interne 9. Ainsi, le débit d'air de refroidissement 11 pénètre à l'intérieur de la chemise 2 et une partie 24 de ce débit traverse directement l'orifice de sortie 23 et va circuler dans la plate-forme interne 9 pour la refroidir. Comme dans le mode de réalisation montré sur les figures 1 et 2, l'air circulant dans la plate-forme 9 s'échappe par les orifices 12 situés en amont de la plate-forme interne 9, puis une partie 17 franchit le labyrinthe 18, tandis que l'autre partie 19 est rejetée dans la veine de gaz chauds en amont du distributeur, ce qui assure le refroidissement des disques de turbine 15 et 16.

Avec cette seconde solution, l'air de refroidissement de la plate-forme interne 9 et des disques 15, 16 est plus frais, ce qui est favorable et le débit de cisaillement du flux de refroidissement par impact est plus réduit. En revanche, il y a moins de débit pour refroidir la pale, ce qui est un inconvénient. De plus, des fuites 25, 26 peuvent remonter dans la cavité périphérique 3 à partir de l'orifice de sortie 23 ce qui ne simplifie pas la modélisation mathématique des écoulements.

Si une crique 20 apparaît au bord de fuite de la pale 1, ainsi que cela est montré sur la figure 4, une partie 21 de l'air de refroidissement s'échappe dans le flux de gaz chauds et selon les conditions de fonctionnement du moteur, le sens de l'écoulement de l'air dans la plate-forme interne 9 se conservera ou s'inversera. Les plates-formes 9 et les pales 1 pourront également être endommagées ou détruites. La surtempérature en 13 et 14 peut conduire à un échauffement dangereux du rotor, la dilatation des disques induisant des contacts entre éléments mobiles et anneaux fixes.

Dans les deux variantes actuelles décrites ci-dessus, la paroi 4 de la pale 1 est munie, en outre, d'orifices calibrés afin de former un film protecteur autour de la pale.

Partant de cet état de la technique, l'invention s'est donné pour but de proposer une aube de distributeur dans laquelle la circulation de fluide dans la plate-forme interne ne puisse pas s'inverser en cas de naissance d'une crique au bord de fuite de la pale.

L'invention concerne donc une aube de distributeur de turbine, munie d'un dispositif de refroidissement, cette aube comportant une pale creuse insérée entre une plate-forme externe et une plate-forme interne également creuses, et le dispositif de refroidissement comportant une chemise disposée à l'intérieur de la pale, cette chemise présentant une jupe multiperforée maintenue écartée de la paroi périphérique de la pale et une paroi de fond ayant un orifice de sortie en regard d'un orifice d'entrée ménagé dans une paroi de la plate-forme interne, cette paroi de fond étant également maintenue écartée de ladite paroi de plate-forme, l'intérieur de la chemise étant alimenté en un débit d'air de refroidissement à partir de la plate-forme externe, une partie de cet air de refroidissement refroidissant par impact la paroi périphérique de la pale à travers la multiperforation de la jupe, et l'autre partie circulant dans la plate-forme interne, d'où elle s'échappe par des orifices ménagés en amont de ladite plate-forme afin de refroidir les disques de la turbine, la paroi de la pale comportant, en outre, des orifices calibrés pour constituer un film protecteur à l'extérieur de la pale.

Cette aube est caractérisée par le fait que l'orifice de sortie de la paroi de fond de la chemise et l'orifice d'entrée dans la plate-forme interne communiquent entre eux par un dispositif d'étanchéité qui empêche la communication directe entre l'intérieur de la plate-forme interne et la cavité délimitée par la paroi périphérique de la pale et l'extérieur de la chemise.

Grâce à cette disposition, il n'y a pas de mélange possible des deux débits d'air au pied de la chemise, et la plate-forme interne sera toujours refroidi par un air frais, même en cas de naissance de criques dans le bord de fuite de la pale.

De préférence, le dispositif d'étanchéité est constitué de deux troncs de cône s'emboîtant l'un dans l'autre et dont les ouvertures au sommet sont disposées à l'intérieur de la chemise, le tronc de cône mâle étant solidaire de la plate-forme interne et délimitant l'orifice d'entrée et le tronc de cône femelle étant solidaire de la chemise et délimitant l'orifice de sortie.

Cette disposition permet la fixation axiale respective des pièces et l'immobilisation latérale de la base de la chemise.

D'autres caractéristiques et avantages de l'invention ressortiront à la lecture de la description suivante faite à titre d'exemple et en référence au dessins annexé dans lequel :
Les figures 1 à 4 sont des coupes selon un plan radial passant par l'axe de rotation de la turbine d'une aube de distributeur de l'art antérieur, les figures 1 et 2 montrant un premier mode de réalisation d'un circuit de refroidissement et les figures 3 et 4 montrant un deuxième mode de réalisation du circuit de refroidissement ;
la figure 5 est une coupe selon un plan radial passant par l'axe de rotation de la turbine d'une aube de distributeur selon la présente invention ;

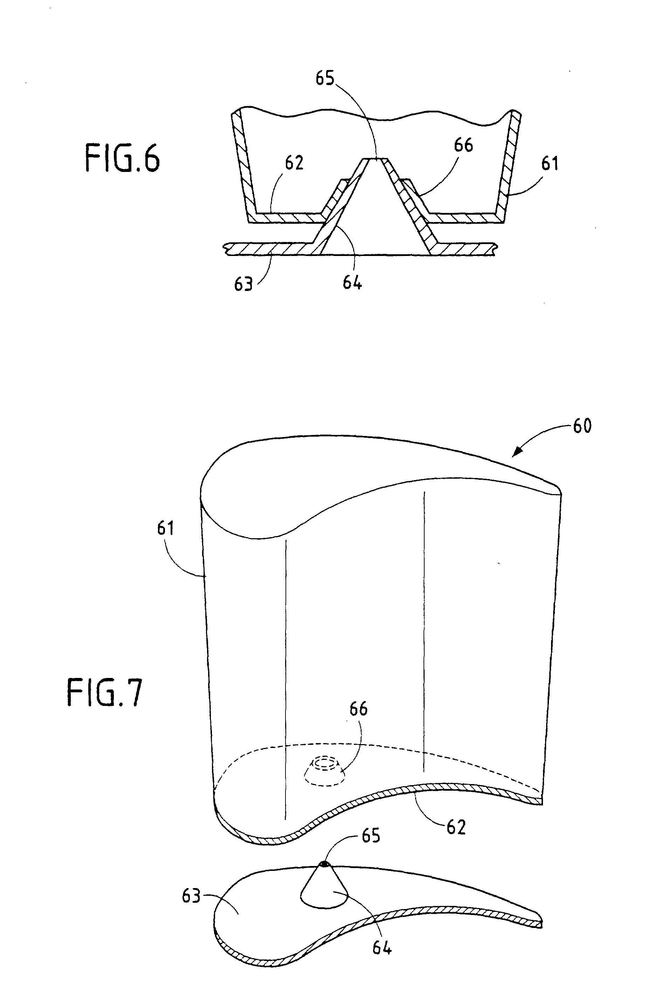

la figure 6 montre, à plus grande échelle, les moyens de communication entre l'intérieur de la chemise et la plate-forme interne ;
la figure 7 est une vue éclatée de la paroi supérieure de la plate-forme interne et du pied de la chemise ;
la figure 8 est une coupe semblable à celle-ci de la figure 5 qui montre les circulations du débit d'air de refroidissement en cas de naissance d'une crique dans le bord de fuite de la pale.

La figure 5 montre une aube fixe 40 d'un distributeur interposé entre les roues 41 et 42 d'une turbine 43 à haute pression à deux étages d'axe de rotation 44. L'aube 40 comporte de manière connue une pale aérodynamique creuse 45 interposée entre une plate-forme externe non représentée sur les dessins et une plate-forme interne 46. L'ensemble des aubes 40 du distributeur forme une couronne et le flux de gaz chauds sortant de la grille d'aubes mobiles 47 de la roue amont 41 de la turbine 43 est redressé par les pales 45 avant d'attaquer les aubes mobiles 48 de la roue aval 42. Les plates-formes externes du distributeur délimitent le contour externe de la veine de gaz chauds, tandis que les plates-formes internes 9 en délimitent le contour interne.

Les roues 41 et 42 comportent respectivement, outre les aubes mobiles 47 et 48, des disques 49, 50 reliés par un tambour 51 entraînant un arbre non représenté sur les dessins. Le tambour 51 comporte un labyrinthe 52 en regard de la plate-forme interne 46, qui sépare l'espace annulaire situé entre la plate-forme interne 46 et le tambour 51 en une enceinte amont 53, et une enceinte aval 54. Ces enceintes 53, 54 communiquent avec la veine de gaz chaud par des interstices 55, 56 qui séparent la plate-forme interne 9 respectivement des disques de turbine 49,50.

Dans la cavité interne de la pale 45 est disposée une chemise 60 qui comporte une jupe multiperforée 61 et une paroi de fond 62 située au voisinage et à l'écart de la paroi 63 qui sépare l'intérieur de la pale 45 de l'intérieur de la plate-forme interne 46. La paroi 63 présente un tronc de cône mâle 64 entourant un orifice d'entrée 65 dans la cavité interne de la plate-forme interne 46 et qui s'emboîte dans un tronc de cône femelle 66 prévu dans la paroi de fond 63 et qui définit un orifice de sortie. La plate-forme interne 46 comporte en outre, dans sa face amont, des orifices 67 qui mettent en communication l'intérieur de la plate-forme 46 et l'enceinte amont 53.

La chemise 60 est maintenue à distance de la paroi périphérique de la pale 45 par dès plots et elle est alimentée par un débit d'air de refroidissement 70 à partir de la plate-forme externe. Une première partie 71 de cet air de refroidissement s'évacue par la multiperforation de la jupe 61 et refroidit par impact la paroi aérodynamique périphérique de la pale 45, qui comporte des orifices calibrés permettant l'évacuation de cette partie d'air 71 dans la veine de gaz chauds en formant un film de protection autour de la pale. Une deuxième partie 72 du débit d'air de refroidissement pénètre à l'intérieur de la plate-forme par l'ouverture 65 située au sommet du tronc de cône mâle 64, d'où elle s'évacue vers l'enceinte amont 53. Comme le niveau de pression P1 régnant dans l'enceinte amont 53 est supérieur au niveau de pression P2 régnant dans l'enceinte aval 54, le débit 73 d'air à la sortie de la plate-forme interne 46 se divise en un premier flux 73 qui rejoint la veine de gaz chauds en amont du distributeur par l'interstice 55, après avoir refroidi la périphérie du disque amont 49, et en un deuxième flux 74 qui traverse le labyrinthe 52, et l'enceinte aval 54 et rejoint la veine de gaz chauds en aval du distributeur par l'interstice 56.

La communication entre l'intérieur de la chemise 60 et l'intérieur de la plate-forme interne 46 est réalisée par les deux troncs de cône 64 et 66 qui s'emboîtent de manière étanche l'un dans l'autre. Ces deux troncs de cône fixent en outre la position axiale respective de la chemise 60 et de la pale 45 et l'immobilisation latérale de la paroi de fond 62 de la chemise 60 dans la cavité interne de la pale 45.

Le débit d'air 72 servant au refroidissement des disques 49, 50 de turbine est séparé du débit d'air 71 servant au refroidissement de la paroi de la pale, même en cas de présence d'une crique 75 sur le bord de fuite de la pale 45, ainsi que cela est montré sur la figure 8.

## Revendications

1. Aube de distributeur de turbine, munie d'un dispositif de refroidissement, cette aube comportant une pale creuse (45) insérée entre une plate-forme externe et une plate-forme interne (46) également creuses, et le dispositif de refroidissement comportant une chemise (60) disposée à l'intérieur de la pale (45), cette chemise présentant une jupe multiperforée (61) maintenue écartée de la paroi périphérique de la pale (45) et une paroi de fond (62) ayant un orifice de sortie en regard d'un orifice d'entrée ménagé dans une paroi (63) de la plate-forme interne (46), cette paroi de fond étant également maintenue écartée de ladite paroi de plate-forme, l'intérieur de la chemise étant alimenté en un débit d'air de refroidissement (70) à partir de la plate-forme externe, une partie (71) de cet air de refroidissement refroidissant par impact la paroi périphérique de la pale à travers la multiperforation de la jupe (4), et l'autre partie (72) circulant dans la plate-forme interne (46), d'où elle s'échappe par des orifices (67) ménagés en amont de ladite plate-forme afin de refroidir les disques de la turbine (49, 50), la paroi de la pale comportant, en outre, des orifices calibrés pour constituer un film protecteur à l'extérieur de la pale, **caractérisée par le fait que** l'orifice de sortie de la paroi de fond de la chemise et l'orifice d'entrée dans la plate-forme interne communiquent entre eux par un dispositif d'étanchéité qui empêche la communication directe entre l'intérieur de la plate-forme interne (46) et la cavité délimitée par la paroi périphérique de la pale et l'extérieur de la chemise (60).

2. Aube de distributeur selon la revendication 1, **caractérisée par le fait que** le dispositif d'étanchéité comporte deux troncs de cône (64, 66) s'emboîtant l'un dans l'autre et dont les ouvertures au sommet sont disposées à l'intérieur de la chemise, le tronc de cône mâle (64) étant solidaire de la plate-forme interne et délimitant l'orifice d'entrée (65) et le tronc de cône femelle (66) étant solidaire de la chemise et délimitant l'orifice de sortie.

## Patentansprüche

1. Turbinenstator-Schaufel mit einer Kühlvorrichtung, wobei die Schaufel ein hohles Blatt (45) aufweist, das zwischen einer äußeren Plattform und einer inneren Plattform (46), die ebenfalls hohl sind, angeordnet ist, und wobei die Kühlvorrichtung eine im Innern des Blatts (45) angeordnete Verkleidung (60) aufweist, wobei diese Verkleidung eine mehrfach durchlöcherte Schürze (61), die von der Umfangswand des Blatts (45) entfernt gehalten ist, und eine Bodenwand (62) mit einer Austrittsöffnung, die einer in einer Wand (63) der inneren Plattform (46) vorgesehenen Eintrittsöffnung gegenüberliegt, aufweist, wobei diese Bodenwand ebenfalls von der Wand der besagten Plattform entfernt gehalten ist, wobei das Innere der Verkleidung von der äußeren Plattform her mit einem Kühlluftstrom (70) beschickt ist, wobei ein Teil (71) dieser Kühlluft durch die mehrfache Durchlöcherung der Schürze (4) hindurch die Umfangswand des Blatts durch Auftreffen kühlt und der andere Teil (72) in der inneren Plattform (46) zirkuliert, von wo er durch stromaufwärts der besagten Plattform vorgesehenen Öffnungen (67) ausströmt, um die Scheiben der Turbine (49, 50) zu kühlen, wobei die Wand des Blatts außerdem Öffnungen aufweist, die zum Bilden eines Schutzfilms außerhalb des Blatts kalibriert sind, **dadurch gekennzeichnet, dass** die Austrittsöffnung der Bodenwand der Verkleidung und die Eintrittsöffnung in der inneren Plattform durch eine Dichtungsvorrichtung in Verbindung miteinander stehen, welche die direkte Verbindung zwischen dem Innern der inneren Plattform (46) und dem durch die Umfangswand des Blatts und das Äußere der Verkleidung (60) begrenzten Hohlraum verhindert.

2. Statorschaufel nach Anspruch 1, **dadurch gekennzeichnet, dass** die Dichtungsvorrichtung zwei Kegelstümpfe (64, 66) aufweist, die ineinander greifen und deren Öffnungen an der Spitze im Innern der Verkleidung angeordnet sind, wobei der aufgenommene Kegelstumpf (64) mit der inneren Plattform verbunden ist und die Eintrittsöffnung (65) begrenzt, und der aufnehmende Kegelstumpf (66) mit der Verkleidung verbunden ist und die Austrittsöffnung begrenzt.

## Claims

1. Turbine guide vane, equipped with a cooling device, this vane comprising a hollow aerofoil (45) inserted between an external platform and an internal platform (46), that are also hollow, and the cooling device comprising a liner (60) arranged inside the aerofoil (45), this liner having a multiperforated skirt (61) held way from the peripheral wall of the aerofoil (45) and an end wall (62) having an outlet orifice facing an inlet orifice formed in a wall (63) of the internal platform (46), this end wall also being held away from the said platform wall, the inside of the liner being supplied with a flow of cooling air (70) from the external platform, some (71) of this cooling air cooling the peripheral wall of the aerofoil by impact through the multiperforations in the skirt (4), and the rest (72) flowing into the internal platform (46) from where it escapes via orifices (67) formed upstream of the said platform in order to cool the turbine discs (49, 50), the wall of the aerofoil furthermore comprising calibrated orifices to form a protective film on the outside of the aerofoil, **characterized in that** the outlet orifice in the end wall of the liner and the inlet orifice into the internal platform communicate with one another via a sealing device that prevents direct communication between the inside of the internal platform (46) and the cavity delimited by the peripheral wall of the aerofoil and the outside of the liner (60).

2. Guide vane according to Claim 1, **characterized in that** the sealing device comprises two cone frustums (64, 66) fitted one inside the other, and of which the vertex openings are arranged inside the liner, the male cone frustum (64) being secured to the internal platform and delimiting the inlet orifice (65), and the female cone frustum (66) being secured to the liner and delimiting the outlet orifice.
